Europäisches Patentamt

European Patent Office

Office européen des brevets

(19)

(11) Numéro de publication : **0 064 116**
**B1**

(12) **FASCICULE DE BREVET EUROPÉEN**

(45) Date de publication du fascicule du brevet :
28.08.85

(51) Int. Cl.⁴ : **A 01 F 15/00, A 01 D 85/00**

(21) Numéro de dépôt : 81400718.3

(22) Date de dépôt : **06.05.81**

(54) **Presse à balles cylindriques travaillant en continu.**

(43) Date de publication de la demande :
10.11.82 Bulletin 82/45

(45) Mention de la délivrance du brevet :
28.08.85 Bulletin 85/35

(84) Etats contractants désignés :
DE FR GB IT NL

(56) Documents cités :
DE-A- 2 848 777
FR-A- 2 368 214
FR-A- 2 398 448
US-A- 3 004 377
US-A- 3 053 328

(73) Titulaire : **JOHN DEERE (Société Anonyme)
8, Quai de la Madeleine
F-45000 Orléans (FR)**

(72) Inventeur : **Viaud, Jean
Chargey-les-Gray
F-70100 Gray (FR)**

(74) Mandataire : **Pruvost, Marc Henri et al
Cabinet ORES 6, Avenue de Messine
F-75008 Paris (FR)**

EP 0 064 116 B1

**Description**

La présente invention se rapporte d'une façon générale aux presses à balles cylindriques ou rondes du type comportant des jeux de bandes ou courroies qui, par leur déplacement, forment par enroulement à l'intérieur d'une chambre ménagée dans le corps de la presse une balle de forme générale cylindrique à partir de produits de récolte, notamment de fourrage ou de foin, ramassés sur le champ par un ramasseur au cours de la progression de la presse et amenés en nappe à la chambre de formation de la balle. Lorsque la balle ainsi formée a atteint le diamètre requis, elle est soumise à une opération de liage, puis éjectée généralement par un système de porte prévu à l'aiirère de la presse.

On comprend que les opérations de liage et d'éjection des balles formées dans la chambre de la presse exigent un certain laps de temps, pendant lequel la presse est à l'arrêt, ce qui réduit en conséquence le rendement d'une machine de ce type.

Un inconvénient des presses à balles rondes, dont les avantages par rapport aux presses à balles rectangulaires sont bien connus, réside justement dans cette réduction de rendement ou de capacité qui résulte des temps d'arrêt nécessaires au liage et à l'éjection.

Or la tendance actuelle dans le machinisme agricole est d'augmenter autant que possible la capacité ou le rendement des machines ou appareils utilisés dans une exploitation.

Il a été proposé, pour remédier à cet inconvénient et augmenter la capacité de travail de la presse, de réaliser une presse comportant deux chambres situées l'une derrière l'autre, dont l'une constitue une chambre avant de formation de la balle, à laquelle les produits de récolte ramassés sur le sol sont amenés par l'intermédiaire d'un dispositif d'alimentation, et une chambre arrière de liage, à laquelle la balle formée dans la chambre avant est transférée quand elle a atteint le diamètre requis et dans laquelle cette balle est liée, pour être ensuite éjectée ou déchargée sur le sol (DE-A-2 848 777). Toutefois, un agencement du type décrit dans ce document antérieur n'apporte pas une solution optimale au problème ainsi posé. En effet, la solution ainsi proposé exige un transfert de la balle formée dans la chambre avant à la chambre arrière, et surtout l'agencement décrit par ce document antérieur est complexe et en conséquence coûteux et sujet à des dérangements compte tenu des conditions de travail souvent difficiles rencontrées en agriculture.

Le but de l'invention est en conséquence de créer une presse à balles cylindriques de capacité ou de rendement accru, ne présentant pas les inconvénients des presses existantes.

L'invention est matérialisée à cet effet dans une presse à balles cylindriques ou rondes du type dans lequel les produits de récolte amenés en nappe à une chambre de formation de la balle au moyen d'un ramasseur ou dispositif équivalent subissent à l'intérieur de cette chambre un enroulement sous l'effet de bandes ou courroies entraînées de façon positive, pour former une balle cylindrique ou ronde par enroulement de cette nappe sur elle-même, cette balle étant ensuite liée dans cette chambre, puis éjectée de celle-ci par une porte relevable, caractérisée en ce qu'elle comprend sur un même châssis, de part et d'autre d'un plan transversal à la direction de marche de la presse, deux telles chambres de formation d'une balle cylindrique, constituant une chambre avant et une chambre arrière, un dispositif unique de ramassage des produits de récolte et d'alimentation de ces chambres en produits de récolte, disposé sensiblement dans ce plan transversal, des moyens pour diriger sélectivement ces produits de récolte vers l'une ou l'autre de ces deux chambres par l'intermédiaire de ce dispositif de ramassage et d'alimentation, et des moyens conjugués à la chambre avant pour décharger latéralement les balles formées dans cette chambre après leur liage.

Il est ainsi possible de former d'abord une balle cylindrique ou ronde dans l'une des chambres de la presse à partir des produits de récolte ramassés sur le champ puis, lorsque la balle ainsi formée a atteint le diamètre requis, de commander les moyens sus-mentionnés pour diriger les produits de récolte ainsi ramassés vers l'autre chambre de la presse, en vue de la formation d'une autre balle, tandis que la balle formée dans la première chambre est soumise à une opération de liage, puis éjectée hors de la presse. On comprend qu'il en résulte ainsi une presse capable de travailler en continu, c'est-à-dire pouvant ramasser les produits de récolte sur le champ, former les balles et les déposer ensuite sur le sol ou les éjecter sans interruption du travail de ramassage et ainsi en principe sans arrêt de la machine.

Suivant une disposition paraissant judicieuse, il est prévu un ramasseur unique occupant sur la longueur de la presse une position sensiblement médiane et combiné à un organe distributeur déviant le flux de produits de récolte ramassés par ce ramasseur de façon sélective vers des organes d'alimentation en produits des chambres de formation des balles cylindriques. Il est possible, si désiré, de prévoir en combinaison avec un ramasseur un transporteur orientable dirigeant les produits de récolte ramassés vers l'une ou l'autre des deux chambres de la presse. Toutefois, un dispositif préférentiel consiste à prévoir, en combinaison avec un ramasseur, deux transporteurs ou organes d'alimentation analogues, le distributeur pouvant être actionné pour dévier les produits de récolte ramassés vers l'un ou l'autre de ces transporteurs. Ce distributeur peut être actionné à la main par le conducteur du véhicule tracteur auquel la presse est généralement attelée, ou bien de façon automatique à la fin de l'opération de formation d'une balle, par exemple sous l'action d'un palpeur actionné lui-même quand la balle a atteint le diamètre requis, d'une manière qui est en soi déjà connue par exemple pour le déclenchement automatique de l'opération de liage.

Suivant l'invention, on peut prévoir un jeu de bandes ou courroies pour chacune des deux chambres de formation des balles de la presse. Toutefois, une solution paraissant avantageuse consiste à disposer les bandes ou courroies et les rouleaux de renvoi conjugués de telle sorte qu'un seul jeu de bandes ou courroies sans fin délimitent les deux espaces de formation des balles dans les deux chambres de la presse, ce qui permet d'assurer l'entraînement de ces bandes ou courroies à partir d'un seul et même mécanisme, prévu normalement sur les presses, connues, et d'obtenir ainsi une vitesse de formation des balles identique pour les deux chambres de la presse. Une disposition de ce type est facilité par le fait que les balles se forment de façon successive dans les chambres de la presse et qu'une balle ayant atteint le diamètre requis et ayant subi un liage est éjectée hors de la presse avant que la balle formée dans l'autre chambre n'ait atteint elle-même son diamètre final, ce qui permet la compensation de longueur de bandes ou courroies requise sans avoir à réaliser une compensation totale égale à la somme des compensations de longueur dans chaque chambre de la presse. Les rouleaux de renvoi supérieurs mobiles des jeux de bandes ou courroies peuvent alors être montés sur des bras articulés autour d'un axe transversal situé sensiblement au milieu de la longueur de la presse.

On comprend à la lecture de ce qui précède que la presse suivant l'invention comporte une chambre arrière et une chambre avant. L'éjection de la balle formée dans la chambre arrière peut avoir lieu de la manière habituelle par le système de porte arrière de la presse. Toutefois, en ce qui concerne la chambre avant, des moyens doivent être prévus pour éviter l'arrêt de la presse et son recul pour le dégagement d'une balle éjectée hors de la presse par une porte avant.

Pour tenir compte du problème ainsi posé, il est prévu sur le châssis de la presse, suivant un mode de réalisation possible, un chariot déplaçable transversalement et une porte avant disposée en face de ce chariot de façon telle qu'une balle éjectée par cette porté avant vienne reposer sur ledit chariot, des moyens étant en outre prévus pour déplacer le chariot précité transversalement à la direction de marche de la presse et hors du gabarit en largeur de celle-ci, afin de décharger sur le côté de la presse la balle qui a été formée, puis déposée sur ce chariot.

La description qui va suivre, faite en regard des dessins annexés, donnés à titre non limitatif, permettra de mieux comprendre l'invention.

La Figure 1 est une vue de profil d'une presse suivant l'invention.

La Figure 2 est une vue schématique montrant les organes et dispositifs intérieurs de la presse, les parties qui ne sont pas nécessaires à la compréhension de l'invention ayant été supprimées.

Les Figures 3 à 8 sont des vues schématiques analogues à la Figure 2, montrant le mode d'utilisation de la presse suivant l'invention.

La Figure 9 est une vue en perspective montrant le mode de déchargement d'une balle cylindrique formée dans la chambre avant de la presse.

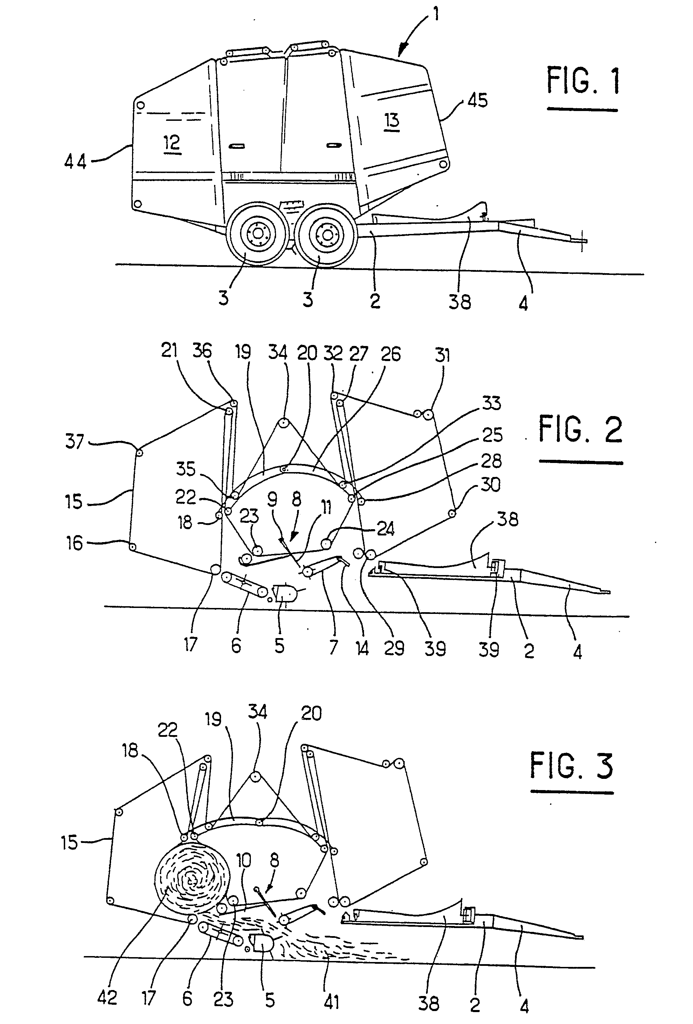

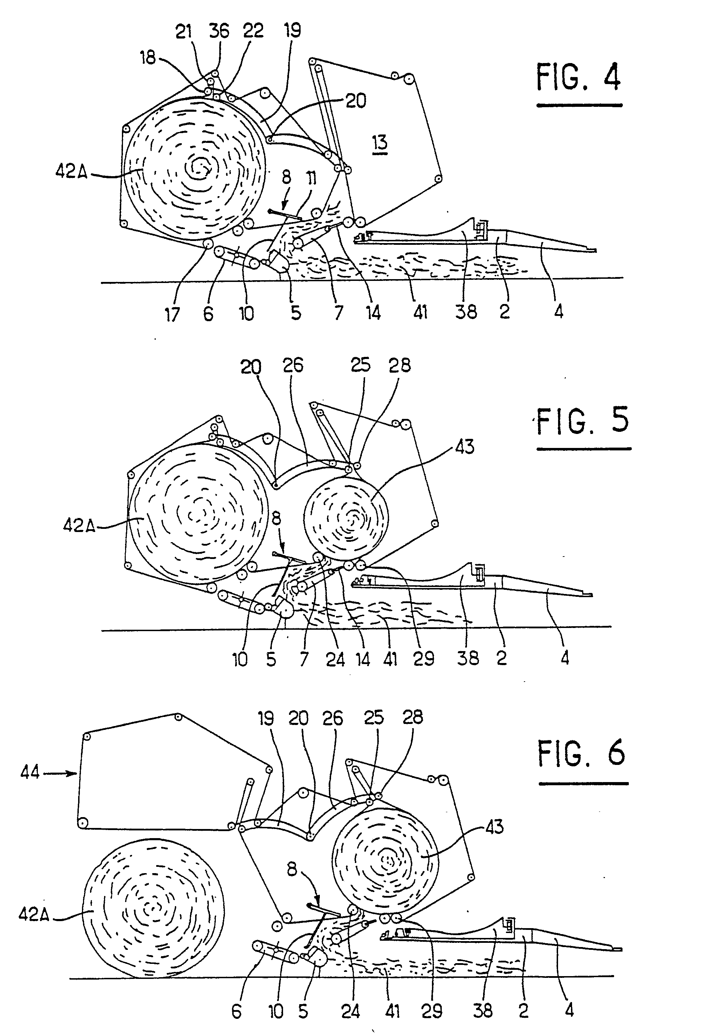

Sur la Figure 1, on a désigné d'une façon générale par la référence 1 une presse à balles cylindriques ou rondes comprenant un châssis 2 supporté dans le cas présent par deux paires de roues 3 et destinée à être attelée à un véhicule tracteur tel qu'un tracteur agricole, par un timon ou une flèche d'attelage 4. Comme indiqué précédemment, on a simplement représenté sur la Figure 2 les organes de la presse nécessaires à la compréhension de l'invention. On voit que cette presse comprend un ramasseur 5, qui peut être de type classique et qui est monté de la manière habituelle transversalement à la direction de marche de la presse, mais qui occupe ici une position située sensiblement au milieu de la longueur de cette presse. Le ramasseur 5 est combiné dans le cas présent à deux transporteurs élévéteurs 6, 7. Le transporteur 6 est dirigé vers l'arrière, tandis que le transporteur 7 est dirigé vers l'avant. Le distributeur indiqué en 8 est monté dans la partie médiane de la presse entre les deux transporteurs 6, 7, sensiblement au-dessus du ramasseur 5, de manière à pouvoir pivoter autour d'un axe 9 orienté transversalement à la presse. Ce distributeur 8 comprend dans le cas présent deux déflecteurs 10, 11 dirigés respectivement vers l'arrière et vers l'avant et peut occuper deux positions différentes dont l'une est représentée sur les Figure 2, 3, 7 et 8, tandis que l'autre est visible sur les Figures 4, 5 et 6. Dans la première de ces deux positions du distributeur 8, le déflecteur 11 est interposé dans le trajet des produits de récolte en direction du transporteur 7, tandis que le déflecteur 10 occupe une position d'effacement, pour diriger le flux de produits de récolte vers le transporteur 6, tandis que la condition inverse est obtenue dans l'autre position du distributeur 8, c'est-à-dire que le déflecteur 10 est interposé dans le trajet des produits de récolte provenant du ramasseur 5, tandis que le déflecteur 11 occupe une position d'effacement, ce qui dévie les produits de récolte vers le transporteur 7 comme cela est bien visible sur les Figures 4 et 6.

La presse suivant l'invention comprend deux chambres de formation de balles cylindriques, à savoir une chambre arrière 12 et une chambre avant 13, comme indiqué sur les dessins. Comme cela apparaît aisément sur la Fig. 2, la chambre 12 est alimentée en produits à partir du transporteur 6, tandis que la chambre 13 est alimentée à partir du transporteur 7, un volet 14 prévu vers l'extrémité supérieure de ce transporteur 7 étant alors relevé pour diriger vers les bandes ou courroies les produits de récolte déplacés sur ledit transporteur 7.

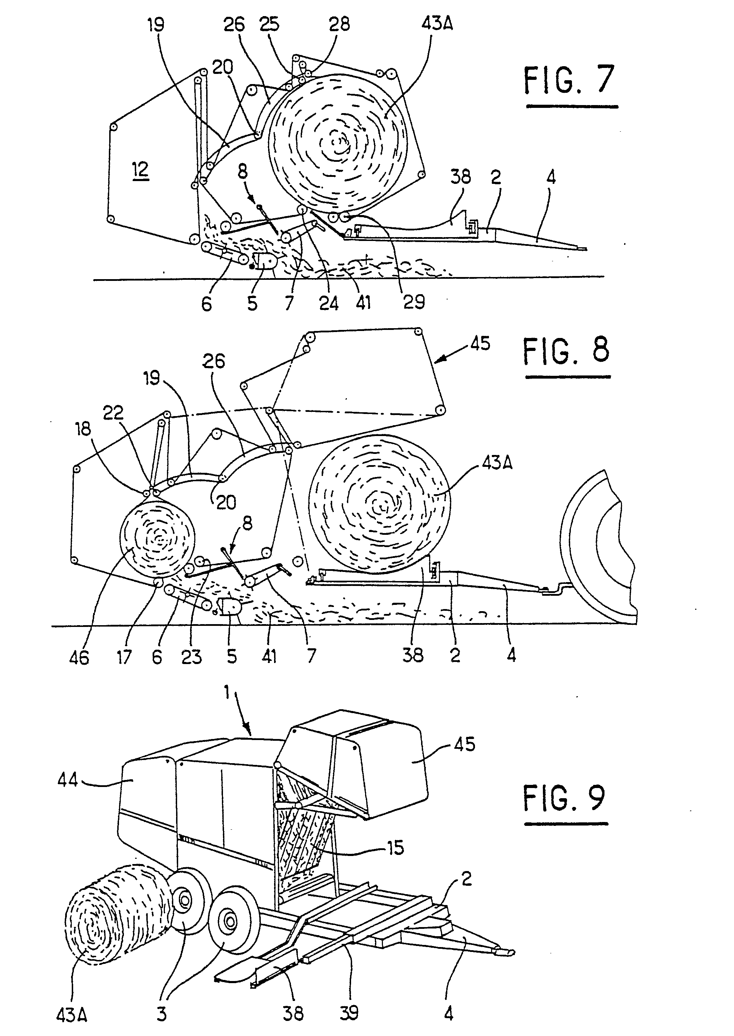

Suivant le mode de réalisation considéré, il est prévu un seul jeu de bandes ou courroies sans fin pour les deux chambres de formation des balles de la presse. A cet effet, les bandes ou courroies, indiquées en 15, passent sur des rouleaux inférieurs arrière fixes 16, 17, puis sur un rouleau intermédiaire mobile 18 prévu à l'extrémité de bras 19 montés à pivotement autour d'un axe transversal 20 situé sensiblement au milieu de la longueur de la presse. Ces bandes ou courroies passent ensuite sur un rouleau supérieur arrière fixe 21, sur un autre rouleau intermédiaire 22 également porté par les bras 19, sur un rouleau inférieur de transfert 23 associé à la chambre arrière puis sur un rouleau de transfert 24 associé à la chambre avant, ces bandes ou courroies rejoignant alors cette chambre avant de la presse. Lesdites bandes ou courroies passent ensuite sur un premier rouleau intermédiaire 25 porté par des bras 26 pivotant autour du même axe 20 que les bras 19, sur un rouleau supérieur avant fixe 27, puis sur un second rouleau intermédiaire 28 fixé à l'extrémité des bras 26, pour rejoindre les rouleaux inférieurs avant 29, 30 de la presse. Ces bandes ou courroies passent ensuite sur un rouleau supérieur fixe 31 et un rouleau supérieur mobile 32 de tension des courroies, prévus pour la chambre avant de la presse, autour d'un rouleau 33 également porté par les bras 26, autour d'un rouleau de transfert supérieur 34, puis sur un autre rouleau de renvoi 35 porté par les bras 19 de la presse, et finalement autour des rouleaux supérieurs mobile 36 et fixe 37 de la chambre arrière. Les rouleaux intermédiaires assurent la compensation de longueur de bandes requise comme cela apparaîtra plus loin. Il est prévu, à la partie avant de la presse, un chariot 38 monté de façon coulissant sur des glissières 39 du châssis 2 et pouvant être déplacé transversalement jusque dans une position située en dehors du gabarit en largeur de la presse au moyen d'un vérin, par exemple de type hydraulique, comme en partie visible sur la Figure 9. Le chariot 38 présente une surface de réception incurvée ou en berceau pour une raison qui apparaîtra plus loin. On décrira ci-après, en regard des Figures 3 à 8, le mode d'utilisation et de fonctionnement d'une presse suivant l'invention. On supposera que la condition de départ de la presse est celle représentée sur la Figure 2. Lorsque cette presse progresse dans un champ, les produits de récolte en andain indiqués en 41 sur les dessins sont ramassés par le ramasseur 5 et amenés par le transporteur 6 à la chambre arrière de la presse, du fait de la position occupée par le distributeur 8. On a montré sur la Figure 3 la formation d'une balle 42 dans cette chambre arrière de la presse. Au fur et à mesure de l'augmentation de diamètre de la balle, les bras 19 pivotent vers le haut autour de l'axe 20, ce qui libère une longueur supplémentaire de bandes ou courroies 15, entre les rouleaux 18 et 17, d'une part, et 22 et 23, d'autre part.

La balle en cours de formation augmente de diamètre de la manière normale et on a montré sur la Figure 4 la condition obtenue quand la balle indiquée en 42A, formée dans la chambre arrière de la presse, a atteint son diamètre maximum. On voit que dans cette condition les bras 19 sont relevés également au maximum, les rouleaux 18 et 22 étant alors immédiatement voisins du rouleau supérieur fixe 21 associé à cette chambre arrière de la presse.

A ce moment, le distributeur 8 est inversé sous la commande du conducteur du tracteur ou de façon automatique, et le déflecteur 10 s'interpose alors dans le trajet des produits de récolte provenant de l'andain 41 et ramassés par le ramasseur 5, pour les dévier vers le transporteur avant 7, tandis que le volet 14 est relevé.

Les produits sont alors dirigés par ce transporteur 7 vers la chambre avant 13 de la presse, ce qui est rendu possible étant donné que le déflecteur 11 a été amené dans une position d'effacement. La condition obtenue est celle visible sur la Figure 4. Dans cette condition, la balle 42A qui se trouve dans la chambre arrière de la presse est liée, tandis qu'une balle 43 se forme progressivement dans la chambre avant de la presse, comme montré sur la Figure 5. La longueur supplémentaire de bandes ou courroies alors nécessaire est fournie par basculement vers le haut des bras 26 autour de l'axe 20, ce qui augmente la longueur de bande disponible entre les rouleaux 29 et 28, d'une part, et 24 et 25, d'autre part.

Pendant cette opération de formation d'une balle 43 dans la chambre avant de la presse, l'opération de liage de la balle 42A est terminée et la porte arrière 44 (Figure 1) de la presse est relevée d'une manière en soi classique, ce qui permet l'éjection de la balle terminée 42A sur le sol à l'arrière de la presse, tandis que le diamètre de la balle 43 continue d'augmenter, comme montré sur la Figure 6.

On comprend qu'aucun arrêt de la presse n'est nécessaire au cours de ces opérations puisque les produits continuent d'être ramassés.

On a montré sur la Figure 7 la condition obtenue quand la balle formée dans la chambre avant de la presse a atteint son diamètre maximum, cette balle étant désignée ici par 43A. A ce moment, le distributeur 8 est à nouveau inversé par le conducteur du tracteur ou de façon automatique, de sorte que le déflecteur 10 s'efface pour permettre le passage des produits de récolte provenant de l'andain 41 vers le transporteur 6 et la chambre arrière 12 de la presse, tandis que le déflecteur 11 vient se placer comme cela était le cas sur les Fig. 2 et 3 devant le transporteur 7. Le volet 14 est également rabattu.

Une nouvelle balle peut alors se former comme décrit précédemment dans la chambre arrière 12 de la presse, ce qui a été indiqué en 46 sur la Fig. 8.

La partie avant du corps 1 de la presse est également constituée par une porte relevable 45 (Figure 1), et on a montré sur la Figure 8 le stade d'éjection de la balle terminée 43A hors de la chambre avant de la presse, après son liage. On voit que cette balle parvient, lors de son éjection hors de cette chambre avant de la presse, sur le chariot 38, sur lequel elle est retenue grâce au profil en berceau de ce chariot, qui ménage une rampe à la partie avant de celui-ci. Pendant la formation d'une nouvelle balle 46 dans la chambre arrière de la presse, la vérin peut alors être actionné pour déplacer le chariot 38 latéralement jusque dans une position située hors du gabarit en largeur de la presse, comme visible sur la Figure 9, et la balle 43A roule alors sur le sol pour son déchargement. La porte 45 peut être refermée et le chariot 38 peut être ramené en arrière, la condition obtenue étant sensiblement celle visible sur la Figure 3.

On comprend que la présence dans une même presse de deux chambres de formation des balles, dans lesquelles des balles cylindriques ou rondes sont formées en alternance, permet de travailler en principe en continu, c'est-à-dire sans devoir arrêter la presse, ce qui bien entendu correspond à une nette augmentation de la capacité de la machine.

Des modifications peuvent être apportées au mode de réalisation décrit, dans le domaine des équivalences techniques, sans s'écarter de l'invention.

## Revendications

1. Presse à balles cylindriques ou rondes du type dans lequel les produits de récolte amenés en nappe à une chambre de formation de la balle au moyen d'un ramasseur ou dispositif équivalent subissent à l'intérieur de cette chambre un enroulement sous l'effet de bandes ou courroies entraînées de façon positive, pour former une balle cylindrique ou ronde par enroulement de cette nappe sur elle-même, cette balle étant ensuite liée dans cette chambre, puis éjectée de celle-ci par une porte relevable, caractérisée en ce qu'elle comprend sur un même châssis (2), de part et d'autre d'un plan transversal à la direction de marche de la presse, deux telles chambres (12, 13) de formation d'une balle cylindrique, constituant une chambre avant (13) et une chambre arrière (12), un dispositif unique de ramassage des produits de récolte et d'alimentation de ces chambres en produits de récolte (5, 6, 7), disposé sensiblement dans ce plan transversal, des moyens (8) pour diriger sélectivement ces produits de récolte vers l'une ou l'autre de ces deux chambres par l'intermédiaire de ce dispositif de ramassage et d'alimentation, et des moyens (38, 39) conjugués à la chambre avant (13) pour décharger latéralement les balles formées dans cette chambre (13) après leur liage.

2. Presse à balles cylindriques suivant la revendication 1, caractérisée en ce que le dispositif de ramassage et d'alimentation comprend un ramasseur unique (5) occupant sur la longueur de la presse une position sensiblement médiane et combiné à un organe distributeur (8) déviant le flux de produits de récolte (41) ramassés par ce ramasseur (5) de façon sélective vers des organes (6, 7) d'alimentation en produits des chambres respectives (12, 13) de formation des balles cylindriques.

3. Presse à balles cylindriques suivant la revendication 2, caractérisée en ce qu'il est prévu pour l'alimentation des chambres en produits de récolte, en combinaison avec le ramasseur (5), un transporteur orientable dirigeant les produits de récolte ramassés vers l'une ou l'autre des deux chambres (12, 13) de la presse.

4. Presse à balles cylindriques suivant la revendication 2, caractérisée en ce qu'il est prévu, comme organes d'alimentation des chambres respectives, en combinaison avec le ramasseur (5), deux transporteurs (6, 7) ou organes d'alimentation analogues, le distributeur (8) pouvant être actionné pour dévier les produits de récolte ramassés vers l'un ou l'autre de ces transporteurs.

5. Presse à balles cylindriques suivant la revendication 4, caractérisée en ce que des moyens sont prévus pour actionner ce distributeur (8) à la main par le conducteur du véhicule tracteur auquel la presse est attelée ou de façon automatique à la fin de l'opération de formation d'une balle.

6. Presse à balles cylindriques suivant la revendication 5, caractérisée en ce que les moyens d'actionnement automatiques comprennent un organe palpeur déplacé lorsque la balle a atteint le diamètre requis et relié au distributeur (8) pour provoquer son actionnement.

7. Presse à balles cylindriques suivant l'une quelconque des revendications 2 et 4 à 6, caractérisée en ce que le distributeur (8) est constitué par un organe monté à pivotement autour d'un axe transversal (9) de la presse (1) et comportant deux déflecteurs (10, 11) amenés sélectivement dans le trajet des produits de récolte ramassés (41), pour dévier ces produits de récolte vers l'un ou l'autre des transporteurs ou organes d'alimentation analogues (6, 7).

8. Presse à balles cylindriques suivant l'une quelconque des revendications précédentes, caractérisée en ce qu'il est prévu un jeu de bandes ou courroies (15) pour chacune des deux chambres (12, 13) de formation des balles de la presse (1).

9. Presse à balles cylindriques suivant l'une quelconque des revendications 1 à 7, caractérisée en ce qu'il est prévu un seul jeu de bandes ou courroies (15) passant successivement sur des rouleaux de renvoi (16-18, 21-25, 27-37) faisant partie des deux chambres (12, 13) de formation des balles de la presse.

10. Presse à balles cylindriques suivant la revendication 9, caractérisée en ce que des rouleaux de renvoi (22, 35 ; 25, 33) ainsi que des rouleaux intermédiaires (18 ; 28) prévus pour les deux chambres (12, 13) de formation des balles de la presse sont montés sur des bras (19 ; 26) associés respectivement à chacune de ces deux chambres de la presse, ces deux bras pivotant de préférence autour d'un axe transversal commun (20) fixe situé entre les deux chambres (12, 13).

11. Presse à balles cylindriques suivant l'une quelconque des revendications précédentes, caractérisée en ce que les deux chambres (12, 13) de la presse équipées chacune d'un système de porte relevable (44, 45), ont l'une de ces portes (44) dirigée vers l'arrière de la presse, tandis que l'autre porte (45) est dirigée vers l'avant.

12. Presse à balles cylindriques suivant la revendication 11, caractérisée en ce que les moyens conjugués à la chambre avant pour la décharge latérale des balles sont prévus sur le châssis (2) de la presse, devant la porte avant (45), et comportent un chariot (38) ou un organe analogue sur lequel la balle est déchargée lors de l'ouverture de cette porte avant (45), ainsi que des moyens prévus pour déplacer ce chariot (38) transversalement à la presse, de préférence jusqu'en dehors du gabarit de cette presse, de façon à décharger sur le sol la balle reposant sur ledit chariot.

**Claims**

1. A cylindrical or round bale press of the type wherein the crop products which are fed in a layer to a bale forming chamber by means of a pick-up device or equivalent device, within the bale forming chamber, undergo a rolling operation under the effect of positively driven belts or bands, to form a cylindrical or round bale by the layer of crop products being rolled about itself, the bale then being bound in the chamber and then ejected therefrom by way of a liftable door, characterised in that it comprises, on the same chassis (2), on respective sides of a plane which is transverse with respect to the direction of movement of the press, two such chambers (12, 13) for forming a cylindrical bale, constituting a front chamber (13) and a rear chamber (12), a single device for picking up the crop products and for feeding said chambers with crop rpdoucts (5, 6, 7), which is disposed substantially in said transverse plane, means (8) for selectively directing said crop products towards one or other of said two chambers by means of said pick-up and feed device, and means (38, 39) combined with the front chamber (13) for laterally discharging the bales formed in said chamber (13) after binding thereof.

2. A cylindrical bale press according to claim 1, characterised in that the pick-up and feed device comprises a single pick-up means (5) which occupies a substantially central position in relation to the length of the press and which is combined with a distributor member (8) for diverting the flow of crop products (41) which are picked up by said pick-up means (5) selectively towards members (6, 7) for feeding products to the respective cylindrical bale forming chambers (12, 13).

3. A cylindrical bale press according to claim 2, characterised in that provided for feeding crop products to the chambers, in combination with the pick-up means (5), is an orientable conveyor for directing the picked-up products towards one or other of the two chambers (12, 13) of the press.

4. A cylindrical bale press according to claim 2, characterised in that two conveyors (6, 7) or similar feed members are provided, as members for feeding the respective chambers, in combination with the pick-up means (5), wherein the distributor (8) can be actuated to divert the picked-up crop products towards one or other of said conveyors.

5. A cylindrical bale press according to claim 4, characterised in that means are provided for actuating said distributor (8) manually by the driver of the tractor vehicle to which the press is coupled or automatically at the end of the operation of forming a bale.

6. A cylindrical bale press according to claim 5, characterised in that the automatic actuating means comprise a sensor member which is displaced when the bale has reached the required diameter and which is connected to the distributor (8) to cause actuation thereof.

7. A cylindrical bale press according to any one of claims 2 and 4 to 6, characterised in that the distributor (8) comprises a member which is mounted pivotally about a transverse axis (9) of the press (1) and comprising two deflectors (10, 11) which are moved selectively into path of the picked-up crop products (41) to divert said crop products towards one or other of the conveyors or similar feed members (6, 7).

8. A cylindrical bale press according to any one of the preceding claims, characterised in that a set of belts or bands (15) is provided for each of the two bale forming chambers (12, 13) of the press.

9. A cylindrical bale press according to any one of claims 1 to 7, characterised in that there is provided a single set of belts or bands (15) passing successively around direction-changing rollers (16-18, 21-25, 27-37) forming part of the two bale forming chambers (12, 13) of the press.

10. A cylindrical bale press according to claim 9, characterised in that direction-changing rollers (22, 35 ; 25, 33) and intermediate rollers (18 ; 28) provided for the two bale forming chambers (12, 13) of the press are mounted on arms (19 ; 26) associated respectively with each of said two chambers of the press, said two arms preferably pivoting about a common fixed transverse axis (20) disposed between the two chambers (12, 13).

11. A cylindrical bale press according to any one of the preceding claims, characterised in that the two chambers (12, 13) of the press, which are each provided with a liftable door system (44, 45), have one of said doors (44) directed rearwardly of the press, while the other door (45) is directed forwardly.

12. A cylindrical bale press according to claim 11, characterised in that the means combined with the front chamber for lateral discharge of the bales are provided on the chassis (2) of the press, in front of the front door (45), and comprise a carriage (38) or like member on to which the bale is discharged when said front door (45) is open- ned, and means for displacing said carriage (38) transversely with respect to the press, preferably to a position outside the overall width of the press, so as to discharge the bale resting on said carriage on to the ground.

**Patentansprüche**

1. Presse für zylindrische oder runde Ballen des Typs, in dem die Ernteprodukte, die in Form eines Schwads mit Hilfe eines Aufsammlers oder einer äquivalenten Vorrichtung in eine Bildungskammer für den Ballen überführt werden, im Inneren dieser Kammer einer Aufrollung unter der Wirkung von Bändern oder Riemen unterliegen die im positiven Sinne angetrieben werden, um einen zylindrischen oder runden Ballen durch Aufrollen des Schwads auf sich selber zu bilden, wobei der Ballen nachfolgend in dieser Kammer gebunden und darauf von dieser durch eine hebbare Tür ausgeworfen wird, dadurch gekennzeichnet, dass sie auf einem gleichen Chassis (2) beiderseits einer zur Fahrtrichtung der Presse quer verlaufenden Ebene zwei solche Bildungskammern (12, 13) für einen zylindrischen Ballen, welche eine vordere Kammer (13) und eine rückwärtige Kammer (12) bilden, eine einheitliche Vorrichtung zum Aufsammeln der Ernteprodukte und Zuspeisen der Ernteprodukte (5, 6, 7) in diese Kammern, welche ziemlich genau in dieser Querebene angeordnet ist, Mittel (8), um selektiv diese Ernteprodukte nach der einen oder der anderen der Beiden Kammern mit Hilfe dieser Vorrichtung zum Aufsammeln und Zuspeisen zu lenken, und Mittel (38, 39) aufweist, die der vorderen Kammer (13) zugeordnet sind, um die in dieser Kammer (13) gebildeten Ballen nach ihrer Bindung seitlich zu entladen.

2. Presse für zylindrische Ballen nach Anspruch 1, dadurch gekennzeichnet, dass die Vorrichtung zum Aufsammeln und Zuspeisen einen einheitlichen Aufsammler (5) umfasst, der auf der Länge der Presse eine Stellung ziemlich genau in der Mitte einnimmt und mit einem Verteilerorgan (8) kombiniert ist, welches den Fluss der Ernteprodukte (41), die durch den Aufsammler (5) aufgesammelt worden sind, selektiv den Organen (6, 7) zum Zuspeisen der Produkte in die jeweiligen Kammern (12, 13) zur Bildung der zylindrischen ballen ablenkt.

3. Presse für zylindrische Ballen nach Anspruch 2, dadurch gekennzeichnet, dass zur Speisung der Kammern mit Ernteprodukte im Kombination mit dem Aufsammler (5) ein Förderer vorgesehen ist, der die aufgesammelten Ernteprodukte ausrichtbar dirigiert nach der einen oder der anderen der beiden Kammern (12, 13) der Presse.

4. Presse für zylindrisque Ballen nach Anspruch 2, dadurch gekennzeichnet, dass als Zuspeiseorgane für die jeweiligen Kammern in Kombination mit dem Aufsammler (5) zwei Förderer (6, 7) oder analoge Zuspeiseorgane vorgesehen sind, wobei der Verteiler (8) so betätigt werden kann, dass er die aufgesammelten Ernteprodukte zu dem einen oder dem anderen dieser Förderer ablenkt.

5. Presse für zylindrische Ballen nach Anspruch 4, dadurch gekennzeichnet, dass Mittel vorgesehen sind, um den Verteiler (8) von Hand durch den Fahrer des Zugfahrzeuges, an das die Presse angehängt ist, oder auf automatische Weise am Ende der Bildung eines Ballens zu betätigen.

6. Presse für zylindrische Ballen nach Anspruch 5, dadurch gekennzeichnet, dass die automatischen Betätigungsmittel ein Tastorgan aufweisen, welches verstellt wird, wenn der Ballen der erforderlichen Durchmesser erreicht, und das mit dem Verteiler (8) verbunden ist, um dessen Betätigung zu provozieren.

7. Presse für zylindrische Ballen nach irgendeinem der Ansprüche 2 und 4 bis 6, dadurch gekennzeichnet, dass der Verteiler (8) durch ein Organ gebildet ist, das um eine Querachse (9) der Presse (1) schwenkbar montiert ist und zwei Ablanker (10, 11) umfasst, welche selektiv in die Bahn der aufgesammelten Ernteprodukte (41) gebracht werden können, um die Ernteprodukte nach dem einen oder dem anderen Förderer oder analogen Zuspeiseorgan (6, 7) abzulenken.

8. Presse für zylindrische Ballen nach irgendeinem der voranstehenden Ansprüche, dadurch gekennzeichnet, dass ein Satz von Bändern oder Riemen (15) für jede der Bildungskammern (12, 13) für die Ballen der Presse (1) vorgesehen ist.

9. Presse für zylindrische Ballen nach irgendeinem der Ansprüche 1 bis 7, dadurch gekennzeichnet, dass ein einziger Satz von Bändern oder Riemen (15) vorgesehen ist, welche nacheinander über die Umlenkrollen (16-18, 21-25, 27-37) laufen, welche Teil der beiden Bildungs-Kammern (12, 13) für die Ballen der Presse sind.

10. Presse für zylindrische Ballen nach Anspruch 9, dadurch gekennzeichnet, dass die Umlenkrollen (22, 35 ; 25, 33) sowie die Swischenrollen (18 ; 28), die für die beiden Bildungskammern (12, 13) für die Ballen der Presse auf Armen (19, 26) montiert sind, jeweils jeder der beiden Kammern der Presse zugeordnet sind, wobei diese beiden Arme vorzugsweise um eine gemeinsame Querachse (20) schwenken können, welche zwischen den beiden Kammern (12, 13) fest augeordnet ist.

11. Presse für zylindrische Ballen nach irgendeinem der vorandstehenden Ansprüche, dadurch gekennzeichnet, dass die beiden Kammern (12, 13) der Presse, von denen jede mit einem System einer hebbarer Tür (44, 45) ausgerüstet ist, eine dieser Türen (44) von der Presse nach hinten gerichtet haben, während die andere Tür (45) nach vorne gerichtet ist.

12. Presse für zylindrische Ballen nach Anspruch 11, dadurch gekennzeichnet, dass die Mittel, die der vorderen Kammer zugeordnet sind, um die Ballen seitlich zu entladen, auf dem Chassis (2) der Presse vorgesehen sind, und zwar vor der Vorderen Tür (45), und einen Wagen (38) oder ein analoges Organ, auf dem der Ballen während der Öffnung dieser vorderen Tür (45) entladen wird, soxie Mittel umfassen, um den Wagen (38) quer zur Presse zu verlagern, und zwar vorzugsweise bis ausserhalb des Umrisses dieser Presse, derart, dass der auf dem genannten Wagen ruhende Ballen auf den Boden entladen wird.

0 064 116

FIG. 1

FIG. 2

FIG. 3

1

FIG. 4

FIG. 5

FIG. 6

FIG. 7

FIG. 8

FIG. 9